# EUROPEAN PATENT APPLICATION

(11) **EP 3 035 702 A1**
(43) Date of publication of application: **22.06.2016**
(21) Application number: 15199417.5
(22) Date of filing: 10.12.2015
(51) Int. Cl.: H04R 1/32, H04M 1/03, H04R 1/08, H04R 1/28

(54) **ACOUSTIC INPUT MODULE AND ELECTRONIC DEVICE INCLUDING THE SAME**

(30) Priority: 15.12.2014 KR 20140180402
(71) Applicant: Samsung Electronics Co., Ltd, Gyeonggi-do 16677 (KR)
(72) Inventor: LIM, Ho-Yeong, 16677 Gyeonggi-do (KR); LEE, Gi-Hoon, 16677 Gyeonggi-do (KR)
(74) Representative: Gover, Richard Paul

(57) **Abstract**

An acoustic input module and an electronic device including the same are provided. The electronic device includes at least first and second transducers mounted on one surface of a circuit board, a control module mounted on the circuit board for controlling the transducers, and a plurality of sound input holes formed in a housing of the electronic device. The first transducer receives a sound along a first directional path through a first sound input hole and converts the received sound into an electrical signal, and the second transducer receives a sound along a second directional path through a second sound input hole and converts the received sound into an electrical signal. Since the transducers detect sounds originating along different paths, the electronic device can include a multi-channel recording function with an ability to reinforce sound of a specific object and attenuate other sound.

## Description

### TECHNICAL FIELD

The present invention relates to an electronic device. More particularly, certain embodiments of the present invention relate to an acoustic input module capable of inputting a sound and an electronic device including the same.

### BACKGROUND

In general, an electronic device is a device that executes a specific function according to a loaded program, such as a home appliance, an electronic notebook, a portable multimedia player (PMP), a mobile communication terminal, a tablet personal computer (PC), a video/audio device, a desktop/laptop computer, an in-vehicle navigator, and the like. These electronic devices may output stored information visually or audibly. Along with an increase in the integration level of electronic devices and the increasing popularity of ultra-high-speed, large-capacity wireless communication, various functions have recently been loaded in a single mobile communication terminal. For example, an entertainment function such as gaming, a multimedia function such as music/video play, a communication and security function for mobile banking, a scheduling function, and an electronic wallet function, as well as a communication function, have all been integrated in a single electronic device in various combinations.

Along with these advancements of the multimedia functions of electronic devices, the resolution of display devices mounted in the electronic devices and the sound quality of the devices have also been improved. In some cases, a resonant space may be needed for installation of an acoustic input/output module such as a speaker phone or a microphone in order to improve sound quality.

However, there are limitations to providing a resonant space to improve sound quality, while maintaining the desired size of an electronic device. For example, the size of the electronic device may be increased to dispose a plurality of audio input/output modules or secure a larger resonant space for the purpose of improving sound quality, but the increased size may result in an undesirable increase in the overall size of the electronic device. Accordingly, it may be difficult to ensure improved sound quality in a portable electronic device such as a mobile communication terminal.

The above information is presented as background information only to assist with an understanding of the present invention. No determination has been made, and no assertion is made, as to whether any of the above might be applicable as prior art with regard to the present invention.

### SUMMARY

It is an aim of certain embodiments of the present invention to provide an acoustic input module for improving sound quality in converting an input sound into an electrical signal, and an electronic device including the same.

Another aim of certain embodiments of the present invention is to provide an electronic device that facilitates a mounting space for an acoustic input module, while improving sound quality.

Another aim of certain embodiments of the present invention is to provide a miniaturized electronic device that has an acoustic input module that is readily installed in a small mounting space and thus minimizes interference with other circuit parts and minimizes the overall size of the electronic device.

In accordance with a first aspect of the present invention, there is provided an electronic device, the electronic device comprising: at least first and second transducers mounted on a circuit board; a control module, configured to control the transducers; and at least first and second sound input holes formed in a housing of the electronic device; wherein the first transducer is configured to receive a sound through the first sound input hole and convert the received sound into an electrical signal; and wherein the second transducer is configured to receive a sound through the second sound input hole and convert the received sound into an electrical signal.

According to one embodiment the electronic device includes a plurality of transducers mounted on one surface of a circuit board, a control module mounted on the circuit board for controlling the transducers, and a plurality of sound input holes formed in a housing of the electronic device. A first transducer among the plurality of the transducers receives a sound through a first sound input hole among the plurality of the sound input holes and converts the received sound into an electrical signal, and a second transducer among the plurality of the transducers receives a sound through a second sound input hole among the plurality of the sound input holes and converts the received sound into an electrical signal.

In accordance with a second aspect of the present invention, there is provided an acoustic input module, the acoustic module comprising: at least first and second transducers mounted on a circuit board; a control module, configured to control the transducers; an enclosure configured to accommodate the first and second transducers; a first through hole formed in the circuit board; and a second through hole formed in the enclosure; wherein the first transducer is configured to receive a sound through the first through hole and convert the received sound into an electrical signal; and wherein the second transducer receives a sound through the second through hole and convert the received sound into an electrical signal.

According to one embodiment the acoustic input module includes a plurality of transducers mounted on one surface of a circuit board, a control module mounted on the circuit board for controlling the transducers, an enclosure for accommodating at least the transducers, a first through hole formed into the circuit board, and a second through hole formed into the enclosure. A first transducer among the plurality of the transducers receives a sound through the first through hole and converts the received sound into an electrical signal, and a second transducer among the plurality of the transducers receives a sound through the second through hole and converts the received sound into an electrical signal.

Other aspects, advantages, and salient features of the invention will become apparent to those skilled in the art from the following detailed description, which, taken in conjunction with the annexed drawings, discloses various embodiments of the present invention.

### BRIEF DESCRIPTION OF THE DRAWINGS

The above and other aspects, features and advantages of certain embodiments of the present invention will be more apparent from the following description taken in conjunction with the accompanying drawings, in which:
FIG. 1 is a block diagram of an electronic device according to various embodiments of the present invention;
FIG. 2 is an exploded perspective view of an electronic device according to various embodiments of the present invention;
FIG. 3 is an exploded perspective view of an acoustic input module in an electronic device according to various embodiments of the present invention;
FIG. 4 is a sectional view of an acoustic input module in an electronic device according to various embodiments of the present invention;
FIG. 5 is a sectional view of a modification example of an acoustic input module in an electronic device according to various embodiments of the present invention;
FIG. 6 is a sectional view of a part of an electronic device according to various embodiments of the present invention; and
FIG. 7 is a sectional view of a part of a modification example of an electronic device according to various embodiments of the present invention.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present invention as defined by the claims. It includes various specific details to assist in that understanding, but these are to be regarded as merely exemplary. Accordingly, those of ordinary skill in the art will recognize that various changes and modifications of the various embodiments described herein can be made without departing from the scope of the present invention. In addition, descriptions of well-known functions and constructions may be omitted for clarity and conciseness.

Throughout the description and claims of this specification, the words "comprise" and "contain" and variations of the words, for example "comprising" and "comprises", means "including but not limited to", and is not intended to (and does not) exclude other components, integers or steps.

Features, integers or characteristics described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y. The terms and words used in the following description and claims are not limited to the bibliographical meanings, but, are merely used by the inventor to enable a clear and consistent understanding of the present invention. Accordingly, it should be apparent to those skilled in the art that the following description of various embodiments of the present invention is provided for illustration purpose only and not for the purpose of limiting the present invention as defined by the appended claims and their equivalents.

It is to be understood that the singular forms "a", "an", and "the", include plural referents unless the context clearly dictates otherwise. Thus, for example, reference to "a component surface" includes reference to one or more of such surfaces.

By the term "substantially", it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect that the characteristic was intended to provide.

An electronic device according to certain embodiments of the present invention may be a device with a touch panel. The electronic device may be referred to as a portable terminal, a mobile terminal, a communication terminal, a portable communication terminal, a portable mobile terminal, a display device, and the like.

For example, an electronic device may be a smart phone, a portable phone, a navigation device, a game console, a television (TV), an in-vehicle head unit, a laptop computer, a tablet computer, a portable multimedia player (PMP), a personal digital assistant (PDA), and the like. The electronic device may be configured as a pocket-size portable communication terminal with wireless communication functionalities. Also, the electronic device may be a flexible device or a flexible display device.

The electronic device may communicate with an external electronic device such as a server or perform a task through interaction with an external electronic device. For example, the electronic device may transmit an image captured by a camera and/or location information detected by a sensor unit to a server through a network. The network may be, but is not limited to, a mobile or cellular communication network, a local area network (LAN), a wireless local area network (WLAN), a wide area network (WAN), the Internet, a small area network (SAN), or the like.

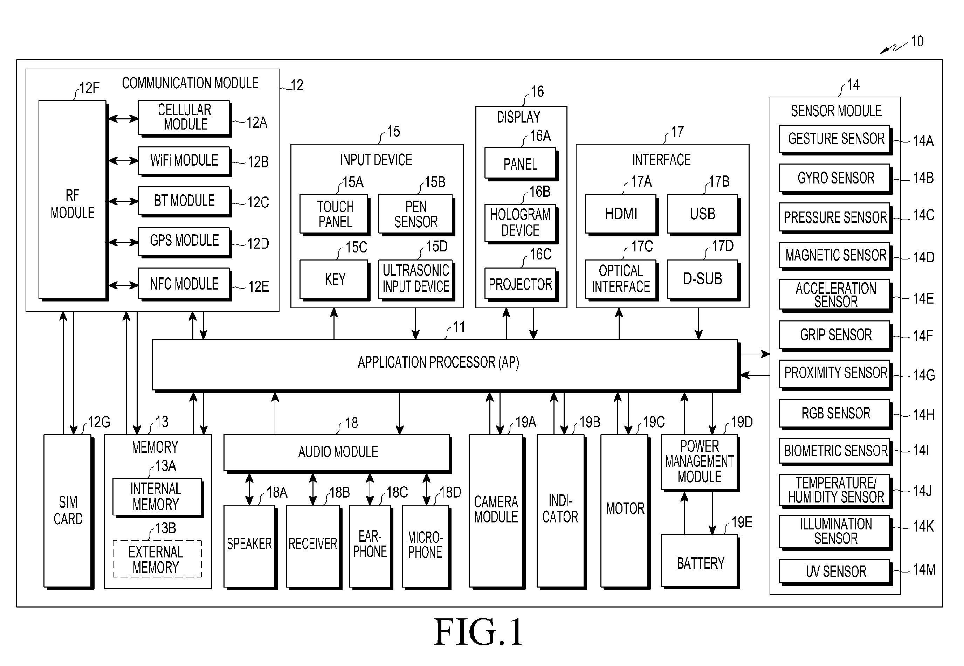

FIG. 1 is a block diagram of an electronic device according to various embodiments of the present invention.

Referring to FIG. 1, an electronic device 10 may include at least one application processor (AP) 11, a communication module 12, a subscriber identification module (SIM) card 12G, a memory 13, a sensor module 14, an input device 15, a display 16, an interface 17, an audio module 18, a camera module 19A, an indicator 19B, a motor 19C, a power management module 19D, and a battery 19E.

The AP 11 may, for example, control a plurality of hardware or software components that are connected to the AP 11 by executing an operating system (OS) or an application program, and may perform processing or computation of various types of data. The AP 11 may be implemented, for example, as a system on chip (SoC) but embodiments are not limited thereto. According to an embodiment of the present invention, the AP 11 may further include a graphics processing unit (GPU) and/or an image signal processor (ISP). The AP 11 may include at least a part (for example, a cellular module 12A) of the components illustrated in FIG. 1. The AP 11 may load a command or data received from at least one of other components (for example, a non-volatile memory), process the loaded command or data, and store various types of data in the non-volatile memory but operations of the AP 11 are not limited thereto.

The communication module 12 may include, for example, the cellular module 12A, a wireless fidelity (Wi-Fi) module 12B, a Bluetooth (BT) module 12C, a global positioning system (GPS) module 12D, a near field communication (NFC) module 12E, and/or a radio frequency (RF) module 12F but embodiments are not limited thereto.

The cellular module 12A may provide services such as voice call, video call, short message service (SMS), or Internet through a communication network. According to an embodiment of the present invention, the cellular module 12A may identify and authenticate the electronic device 10 within a communication network, using a SIM (for example, the SIM card 12G). According to an embodiment of the present invention, the cellular module 12A may perform at least a part of the functionalities of the AP 11. According to an embodiment of the present invention, the cellular module 12A may include a communication processor (CP).

Each of the Wi-Fi module 12B, the BT module 12C, the GPS module 12D, and the NFC module 12E may include, for example, a processor that may process data received or transmitted by the respective modules. According to an embodiment of the present invention, at least a part (for example, two or more) of the cellular module 12A, the Wi-Fi module 12B, the BT module 12C, the GPS module 12D, and/or the NFC module 12E may be included in a single integrated chip (IC) or IC package.

The RF module 12F may transmit and receive communication signals (for example, RF signals). The RF module 12F may include, for example, a transceiver, a power amplifier module (PAM), a frequency filter, a low noise amplifier (LNA), an antenna, or the like but embodiments are not limited thereto. According to another embodiment of the present invention, at least one of the cellular module 12A, the Wi-Fi module 12B, the BT module 12C, the GPS module 12D, and/or the NFC module 12E may transmit and receive RF signals via a separate RF module.

The SIM card 12G may include, for example, a card including a SIM and/or an embedded SIM but embodiments are not limited thereto. The SIM card 12G may include a unique identifier (for example, integrated circuit card identifier (ICCID)) or subscriber information (for example, international mobile subscriber identity (IMSI)).

The memory 13 may include, for example, an internal memory 13A and/or an external memory 13B but embodiments are not limited thereto. The internal memory 13A may be at least one of, for example, a volatile memory (for example, dynamic RAM (DRAM), static RAM (SRAM), or synchronous DRAM (SDRAM)), a non-volatile memory (for example, one time programmable ROM (OTPROM), programmable ROM (PROM), erasable and programmable ROM (EPROM), electrically erasable and programmable ROM (EEPROM), mask ROM, flash ROM, NAND flash memory, or NOR flash memory), a hard drive, and/or a solid state driver (SSD) but embodiments are not limited thereto.

The external memory 13B may further include, for example, a flash drive such as a compact flash (CF) drive, a secure digital (SD), a micro-SD, a mini-SD, an extreme digital (xD), and/or a memory stick but embodiments are not limited thereto. The external memory 13B may be operatively and/or physically coupled to the electronic device 10 via a bus or other various conductors or other interfaces.

The sensor module 14 may, for example, measure physical quantities or detect operational states associated with the electronic device 10, and convert the measured or detected information into electric signals. The sensor module 14 may include at least one of, for example, a gesture sensor 14A, a gyro sensor 14B, an atmospheric pressure sensor 14C, a magnetic sensor 14D, an acceleration sensor (for example, an accelerometer) 14E, a grip sensor 14F, a proximity sensor 14G, a colour sensor (for example, a red, green, blue (RGB) sensor) 14H, a biometric sensor 141, a temperature/humidity sensor 14J, an illumination sensor 14K, and/or an ultra violet (UV) sensor 14M but embodiments are not limited thereto. Additionally or alternatively, the sensor module 14 may include, for example, an electrical-nose (E-nose) sensor, an electromyography (EMG) sensor, an electroencephalogram (EEG) sensor, an electrocardiogram (ECG) sensor, an infrared (IR) sensor, an iris sensor, and/or a finger print sensor, which may be included as a part of the biometric sensor 141. The sensor module 14 may further include a control circuit for controlling one or more sensors included therein. According to various embodiments of the present invention, the electronic device 10 may further include a processor configured to control the sensor module 14, as a part of or separately from the AP 11. Thus, while the AP 11 is in a sleep state, the control circuit may control the sensor module 14.

The input device 15 may include a touch panel 15A, a (digital) pen sensor 15B, a key 15C, and/or an ultrasonic input device 15D but embodiments are not limited thereto. The touch panel 15A may operate using at least one of, for example, capacitive, resistive, infrared, and ultrasonic methods. The touch panel 15A may further include a control circuit. The touch panel 15A may further include a tactile layer to thereby provide haptic feedback to the user.

The (digital) pen sensor 15B may include, for example, a detection sheet which is a part of the touch panel or separately configured from the touch panel. The key 15C may include, for example, a physical button, an optical key, or a keypad but embodiments are not limited thereto. The ultrasonic input device 15D may be a device configured to identify data by detecting, using a microphone (for example, a microphone 18D), ultrasonic signals generated by an input tool capable of generating the ultrasonic signals.

The display 16 may include a panel 16A, a hologram device 16B, and/or a projector 16C but embodiments are not limited thereto. The panel 16A may be configured to be, for example, flexible, transparent, impact-resistant, or wearable. The panel 16A and the touch panel 15A may be implemented as a single module. The hologram device 16B may utilize the interference of light waves to provide a three-dimensional image in empty space. The projector 16C may provide an image by projecting light on a screen. The screen may be positioned, for example, inside or outside the electronic device 10. According to an embodiment of the present invention, the display 16 may further include a control circuit for controlling the panel 16A, the hologram device 16B, and/or the projector 16C.

The interface 17 may include, for example, a high-definition multimedia interface (HDMI) 17A, a universal serial bus (USB) 17B, an optical interface 17C, and/or a D-subminiature (D-sub) 17D but embodiments are not limited thereto. The interface 17 may include, for example, a mobile high-definition link (MHL) interface, an SD/multimedia card interface, or an infrared data association (IrDA) interface.

The audio module 18 may selectively convert sound into an electrical signal, and electrical signals into sound. The audio module 18 may process sound information input into, or output sound from, for example, a speaker 18A, a receiver 18B, an earphone 18C, and/or the microphone 18D but embodiments are not limited thereto.

The camera module 19A may capture, for example, still images and/or video images. According to an embodiment of the present invention, the camera module 19A may include one or more image sensors (for example, a front sensor, a rear sensor, or combination thereof), a lens, an ISP, and/or a flash (for example, a light emitting diode (LED) or a xenon lamp).

The power management module 19D may manage power of the electronic device 10. According to an embodiment of the present invention, the power management module 19D may include a power management integrated circuit (PMIC), a charger IC, and/or a battery or fuel gauge. The PMIC may adopt wired and/or wireless charging. The wireless charging may be performed, for example, in a magnetic resonance scheme, a magnetic induction scheme, an electromagnetic wave scheme and/or an acoustic scheme, and may use additional circuits for wireless charging, such as a coil loop, a resonance circuit, or a rectifier. The battery gauge may measure, for example, a charge level, a voltage, current, and/or temperature of the battery 19E while charging or during use. The battery 19E may include, for example, a rechargeable battery and/or a solar battery but embodiments are not limited thereto.

The indicator 19B may indicate one or more states (for example, boot status, message status, charge status, and so forth) of the electronic device 10 or a part of the electronic device 10 (for example, the AP 11).

The motor 19C may convert an electrical signal into a mechanical vibration and generate vibrations and/or a haptic effect. While not shown, the electronic device 10 may also include a device for supporting mobile TV (for example, a GPU). The device for supporting mobile TV may process media data compliant with, for example, digital multimedia broadcasting (DMB), digital video broadcasting (DVB), or MediaFLO™.

Each of the above-described components of the electronic device 10 may include one or more parts, and the names of the components may vary with the type of electronic device.

According to various embodiments of the present invention, the electronic device may be configured to include at least one of the afore-described components. Some components may be omitted from or added to the electronic device. According to various embodiments of the present invention, one entity may be configured by combining some or all of the components of the electronic device, to thereby perform the same functions of the components prior to the combining.

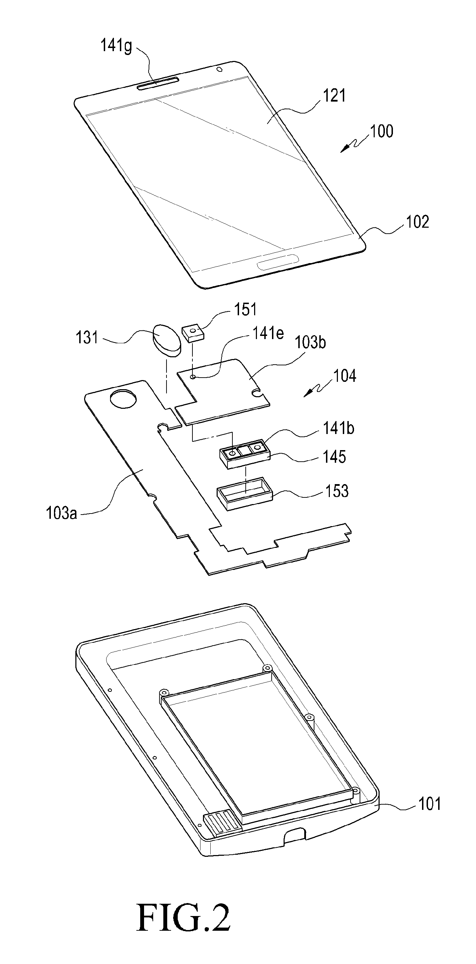

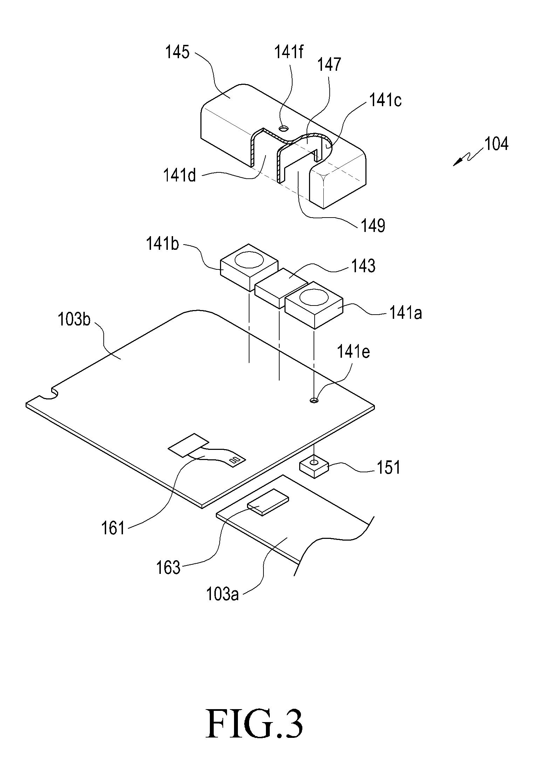

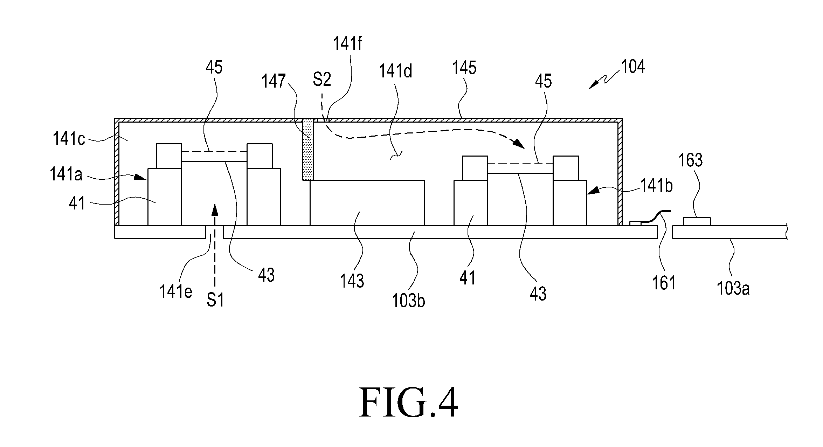

FIG. 2 is an exploded perspective view of an electronic device, FIG. 3 is an exploded perspective view of an acoustic input module in the electronic device, and FIG. 4 is a sectional view of the acoustic input module in the electronic device, according to various embodiments of the present invention.

Referring to FIGS. 2, 3, and 4, an electronic device 100 according to various embodiments of the present invention may be configured as a bar-type terminal. For example, the electronic device 100 may include a bar-type housing 101 with an open front surface, and a display device 102 mounted on the open front surface. The display device 102 may output various types of content such as picture, video, text information, and the like, on a screen. The display device 102 may include a display for outputting content on the screen and a touch panel stacked on the display. As the display device 102 includes a window member, it may protect the display and/or the touch panel. The display device 102 may provide a screen display area 121 on the front surface of the housing 101 and may have a hole and/or other sound passageway and a mechanical key around the screen display area 121, for externally receiving or outputting a sound.

At least one circuit board 103a may be accommodated in the housing 101. The circuit board 103a may include various circuit devices such as an AP for providing overall control of the operations of the electronic device 100, a communication module, a power management module, and a memory but embodiments are not limited thereto. According to various embodiments of the present invention, the circuit devices may be mounted directly on the circuit board 103a, and a part of the circuit devices, such as a speaker module 131, may be mounted in the housing 101 separately from the circuit board 103a, and connected to the circuit board 103a via a coaxial cable or flexible printed circuit board (FPCB) but embodiments are not limited thereto. According to an embodiment of the present invention, the speaker module 131 is shown as mounted in the housing 101 separately from the circuit board 103a, by way of example.

The electronic device 100 may include an acoustic output module 104 (for example, the microphone 18D) including a plurality of transducers 141a and 141b. The transducers 141a and 141b may be controlled by one control module 143, for example, an application specific integrated circuit (ASIC). For example, the control module 143 may supply power to the transducers 141a and 141b, the transducers 141a and 141b may vibrate in response to reception of a sound or other acoustic signal, and the control module 143 may convert the sound or acoustic signal into an electrical signal according to the vibrations of the transducers 141a and 141b. The transducers 141a and 141b may be disposed at both sides of the control module 143, near to each other, or in any number of other various arrangements. As described above, the control module 143 and the transducers 141a and 141b may form the acoustic input module 104 for receiving a sound and converting the sound into an electrical signal.

The acoustic input module 104 further includes an enclosure 145. The enclosure 145 may be provided for a resonant space for the transducers 141a and 141b, and cancel electrical interference between the transducers 141a and 141b or between the control module 143 and other circuit devices. The acoustic input module 104 may include a second circuit board 103b on which the transducers 141a and 141b, the control module 143, and the enclosure 145 are mounted. For example, with the transducers 141a and 141b and the control module 143 mounted on the second circuit board 103b, the enclosure 145 may be mounted on the second circuit board 103b, surrounding the transducers 141a and 141b and the control module 143. As the enclosure 145 is mounted on the second circuit board 103b, the enclosure 145 along with the second circuit board 103b may form a resonant space for the transducers 141a and 141b.

The acoustic input module 104 may be connected to the circuit board 103a via a connection means, for example, an FPCB 161. The FPCB 161 may be extended from the second circuit board 103b and connected to a connector 163 provided on the circuit board 103a. Components of the acoustic input module 104, for example, the control module 143, may receive power or various control signals through the FPCB 161, and transmit a sound converted into an electrical signal to the circuit board 103a, for example, the audio module 18 or the AP 11 via the FPCB 161.

While the acoustic input module 104 is configured to include the second circuit board 103b separately from the circuit board 103a in the illustrated embodiment of the present invention, a part of the circuit board 103a may be included in the acoustic input module 104. For example, the transducers 141a and 141b, the control module 143, and/or the enclosure 145 may be mounted on the circuit board 103a or elsewhere in the housing 101.

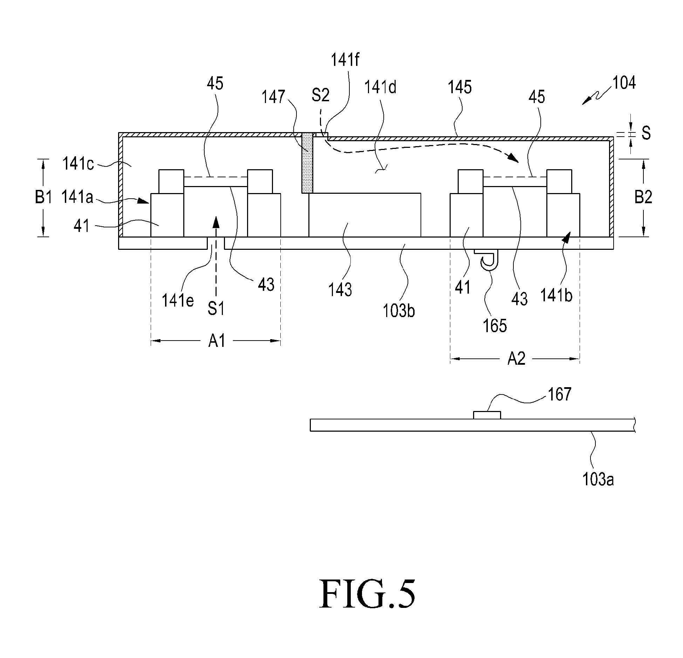

According to various embodiments of the present invention, to form sound input paths S1 and S2 of the transducers 141a and 141b inside the enclosure 145 as shown in FIGS. 4 and 5, the electronic device 100 may include a plurality of through holes 141e and 141f. For example, the first through hole 141e may be formed in the second circuit board 103b to provide the sound input path S1 to the first transducer 141 a, and the second through hole 141f may be formed in the enclosure 145 to provide the sound input path S2 to the second transducer 141b. For sound tuning, the first and second through holes 141e and 141 f may be formed at various positions and having various diameters, but the positions and diameters are not limited to those shown.

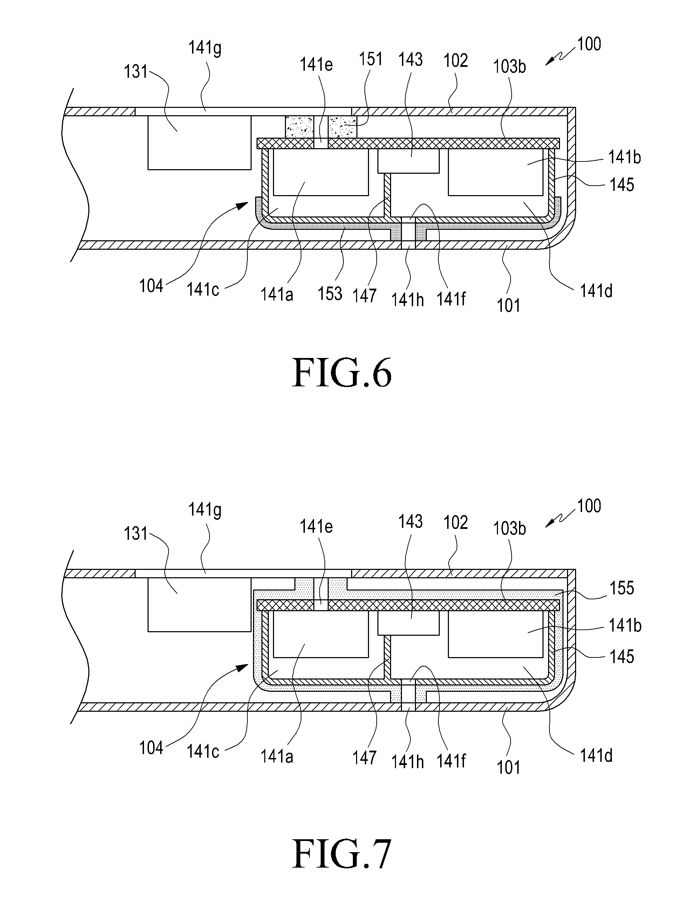

The electronic device 100 may further include one or more duct members for providing the sound input paths S1 and S2 from the outside of the housing 101 to the first and second through holes 141e and 141f. The configuration of the duct members are described in detail with reference to FIG. 6.

The control module 143 may convert a sound received through each of the transducers 141a and 141b into an electrical signal. According to various embodiments of the present invention, the control module 143 may improve sound quality by comparing sounds received from the transducers 141a and 141b, and eliminating or reinforcing some sound accordingly. For example, when a video is captured, the control module 143 may attenuate or reinforce the same sound associated with the capture of the video by comparing a sound received through the first transducer 141a with a sound received through the second transducer 141b. If the first transducer 141a is directed toward a specific object on a screen, and the second transducer 141b is directed toward a direction other than the direction to the specific object during the video capturing, the control module 143 may detect the sound generated from the specific object toward the first transducer 141a by comparing sounds received through the first and second transducers 141a and 141b. The control module 143 may reinforce a sound generated from the specific object by executing an audio zoom function or attenuate a common sound received through the first and second transducers 141 a and 142b by executing an ambient noise cancellation function, thereby improving sound quality. Since the plurality of transducers 141a and 141b are capable of detecting sounds originating along different paths, the electronic device 100 may have a multi-channel recording function with an ability to reinforce sound of a specific object and attenuate other sound.

The quality of sound received through the acoustic input module 104 may further be improved by ensuring isolation between the transducers 141a and 141b. For example, the transducers 141a and 141b may be isolated from each other by forming a diaphragm 147 inside the enclosure 145. The diaphragm 147 may be interposed between the first and second transducers 141a and 141b so as to isolate a space in which the first transducer 141a is accommodated (referred to as 'a first space 141c') from a space in which the second transducer 141b is accommodated (referred to as 'a second space 141d'). If the diaphragm 147 is disposed on the control module 143, at least a part of the control module 143 may be accommodated by forming an avoidance groove 149 at the diaphragm 147. While not shown, when the enclosure 145 is mounted on the second circuit board 103b, sealing members may be disposed respectively between the enclosure 145 and the second circuit board 103b, between the diaphragm 147 and the control module 143, and between the diaphragm 147 and the second circuit board 103b. The sealing members may be formed of a material such as silicon, urethane, Poron, or the like, and may seal the first and second spaces 141c and 141d from other spaces, between the enclosure 145 and the second circuit board 103b, between the diaphragm 147 and the control module 143, and between the diaphragm 147 and the second circuit board 103b.

Thus, components of the acoustic input module 104, for example, the control module 143, may convert sounds received along different paths into electrical signals and realize the audio zoom function, the multi-channel recording function, and the ambient noise cancellation function by processing the converted acoustic signals.

FIG. 5 is a sectional view of a modification example of the acoustic input module in the electronic device according to various embodiments of the present invention.

As compared to the foregoing embodiment of the present invention, the acoustic input module illustrated in FIG. 5 is a modification example implemented for sound tuning. Components that are readily understood from the foregoing embodiment will be denoted by the same reference numerals and their detailed description will be omitted.

Referring to FIG. 5, an acoustic input module 104 may include a stepped portion S formed inside the enclosure 145 along the boundary between the first space 141c and the second space 141d, for example, along the diaphragm 147. For example, the provision of the stepped portion S may allow the volume of the first and second spaces 141c and 141d to be varied, such that at least one space wall may be formed at different heights above the second circuit board 103b. The stepped portion S may be designed appropriately according to the desired sizes of the first and second spaces 141c and 141d, the specifications of the transducers 141a and 141b, and the positions of the first and second through holes 141c and 141f. If the enclosure 145 is formed by pressing a thin metal plate or moulding such as die casting, the stepped portion S may be exposed outward from the enclosure 145.

According to various embodiments of the present invention, each of the transducers 141a and 141b may include a base member 41 for providing a space of a predetermined volume, a membrane 43 for vibrating in response to an input sound, and a back plate 45 disposed in parallel with the membrane 43. The base member 41 may be formed as a tube with top and bottom ends opened, and mounted on the second circuit board 103b, thus closing the bottom end. The membrane 43 and the back plate 45 may face each other, spaced apart by a predetermined gap on the base member 41. As the transducers 141a and 141b receive power from the control module 143, a predetermined amount of charge is applied between the membrane 43 and the back plate 45. As the membrane 43 vibrates in response to a sound, the capacitance between the membrane 43 and the back plate 45 may be changed. In this manner, the control module 143 may convert an input sound into an electrical signal based on the capacitance variation.

The widths A1 and A2 (or outer diameters of the tube-shaped base members 41) and heights B1 and B2 of the transducers 141a and 141b may be set to various values according to the specification of the acoustic input module 104. Dimensions and features of each of the membranes 43, transducer 141a, transducer 141b, space 141c, space 141d, width A1, width A2, height B1 and height B2 may be configured separately to achieve a desired result. For example, sound tuning may be implemented in the acoustic input module 104 by controlling the widths A1 and A2 and heights B1 and B2 of the transducers 141a and 141b. Since the transducers 141a and 141b are accommodated in different spaces (for example, the first and second spaces 141c and 141d) or receive sounds along different paths, the transducers 141a and 141b may have different widths A1 and A2 and different heights B1 and B2. The widths and heights of the transducers 141a and 141b are factors that affect sound characteristics of the transducers 141a and 141b. For example, the widths and heights of the transducers 141a and 141b may mean the width and height, or volume of a space formed by the base member 41.

Referring to FIGS. 4 and 5, the first transducer 141a may receive a sound into the interior space of the base member 41 through the first through hole 141e. The second transducer 141b may receive a sound into an interior space of the enclosure 145, for example, the second space 141d, through the second through hole 141f. The membranes 43 of the first and second transducers 141a and 141b may vibrate in response to the sounds received through the first and second through holes 141e and 141f, and the control module 143 may convert the sounds into electrical signals according to the vibrations of the membranes 43. The length of the sound input path S1 may be changed according to the height of the base member 41 inside the first space 141c. The length of the sound input path S2 may be changed according to the position of the second through hole 141 f and/or the height of the base member 41 inside the second space 141d.

As described above, the acoustic input module 104 of the electronic device 100 may improve the quality of an input sound, while minimizing the increase of the size of the acoustic input module 104, by controlling the plurality of transducers 141a and 141b with the single control module 143. Further, since the increase of the size of the acoustic input module 104 is suppressed, the acoustic input module 104 may be readily mounted in a small-size electronic device. The above-described electronic device 100 may optimize the acoustic input module 104 by controlling the sizes of resonant spaces provided by the electronic device 100, for example, the sizes of the first and second spaces 141c and 141d, the lengths of the sound input paths S1 and S2 running from the first and second through holes 141e and 141 f to the first and second transducers 141a and 141b, and the sizes of the first and second transducers 141a and 141b and base members 41.

According to various embodiments of the present invention, the acoustic input module 104 may be stacked on the circuit board 103a. When the acoustic input module 104 is stacked on the circuit board 103a, a partial area of the second circuit board 103b is not overlapped with the circuit board 103a. Therefore, the circuit board 103a is prevented from closure or obstruction of the first through hole 141e, thereby preventing closure or obstruction of the sound input path S1 to the first transducer 141a.

If the acoustic input module 104 is stacked on the circuit board 103a, a conductive material may be disposed between the circuit board 103a and the second circuit board 103b, thus substituting for the FPCB 161 or the connector 163 in the embodiment illustrated in FIG. 4. For example, a connection terminal 165 (for example, a C-clip) may be disposed beneath the second circuit board 103b and a conductive pad 167 may be disposed on the circuit board 103a in an area in which the circuit board 103a and the second circuit board 103b face each other. When the acoustic input module 104 is mounted on the circuit board 103a, the connection terminal 165 may contact the conductive pad 167, thus bringing the acoustic input module 104 into contact with the circuit board 103a. The connection terminal 165 and the conductive pad 167 may be replaced with a solder and a solder bump.

While the connection terminal 165 and the conductive pad 167 are described with singular expressions in describing an example in which the acoustic input module 104 is stacked on the circuit board 103a, the present invention is not limited thereto. For example, the number of connection terminals 165 and conductive pads 167 may be determined appropriately, taking into account a path for supplying power to the acoustic input module, a path for providing a control signal, and a path for communicating sound converted into electrical signals.

FIG. 6 is a sectional view of a part of the electronic device according to various embodiments of the present invention.

Referring to FIG. 6, the electronic device 100 may include first and second duct members 151 and 153 that provide the sound input paths running from the housing (or the display device 102) to the first and second through holes 141c and 141f.

The electronic device 100 may include sound input holes that enable input of external sounds into the housing 101. An opening portion 141g may be provided at a portion of the screen display area 121 on the front surface of the housing 101. The speaker module 131 may be mounted in the housing 101 in correspondence with the opening portion 141g and thus output a sound through the opening portion 141g. According to various embodiments of the present invention, a part of the opening portion 141g may be provided as a first sound input hole that enables input of a sound into the acoustic input module 104. Although the opening portion 141g partially provides the first sound input hole, it is to be noted that the following description is given with the appreciation that the first sound input hole may be denoted by reference numeral '141g'.

The first duct member 151 may be disposed between the first sound input hole 141g and the first through hole 141e, thus providing an acoustic wave guide from the first sound input hole 141g to the first through hole 141e. Since the opening provides both an acoustic output path and an acoustic input path of the speaker module 131, the first duct member 151 may be disposed in parallel with the speaker module 131.

The second duct member 153 may be disposed between a second sound input hole 141h formed in the housing 101 and the second through hole 141f, thus providing an acoustic wave guide from the second sound input hole 141h to the second through hole 141f. The second duct member 153 may surround at least a part of the enclosure 145.

FIG. 7 is a sectional view of a part of the electronic device according to various embodiments of the present invention.

Referring to FIG. 7, the first and second duct members 151 and 153 in the embodiment illustrated in FIG. 6 may be replaced with a single duct member 155 in the acoustic input module 104 of the electronic device 100 according to various embodiments of the present invention. For example, the duct member 155 may surround the acoustic input module 104, providing an acoustic wave guide from the first sound input hole 141g to the first through hole 141e, and provide an acoustic wave guide from the second sound input hole 141h to the second through hole 141f.

Components of the electronic device 100, for example, the acoustic input module 104 may receive sounds along different paths. Sounds received through the plurality of transducers 141a and 141b may be converted into electrical signals through the control module 143. The audio zoom function, the multi-channel recording function, and the ambient noise cancellation function may be executed according to the settings of the control module 143.

As described above, an electronic device according to various embodiments of the present invention may include a plurality of transducers mounted on one surface of a circuit board, a control module mounted on the circuit board for controlling the transducers, and a plurality of sound input holes formed in a housing of the electronic device. A first transducer among the plurality of the transducers receives a sound through a first sound input hole among the plurality of the sound input holes and converts the received sound into an electrical signal, and a second transducer among the plurality of the transducers receives a sound through a second sound input hole among the plurality of the sound input holes and converts the received sound into an electrical signal.

According to various embodiments of the present invention, the electronic device may further include an enclosure for accommodating at least the transducers, a first through hole formed into the circuit board, and a second through hole formed into the enclosure. The first transducer may receive a sound through the first sound input hole and the first through hole, and the second transducer may receive a sound through the second sound input hole and the second through hole.

According to various embodiments of the present invention, the electronic device may further include a diaphragm inside the enclosure. The diaphragm may isolate a space that accommodates the first transducer from a space that accommodates the second transducer inside the enclosure.

According to various embodiments of the present invention, the electronic device may further include a stepped portion along the boundary between the space that accommodates the first transducer from the space that accommodates the second transducer inside the enclosure.

According to various embodiments of the present invention, the electronic device may further include a first duct member configured to provide an acoustic wave guide from the first sound input hole to the first through hole and a second duct member configured to provide an acoustic wave guide from the second sound input hole to the second through hole.

According to various embodiments of the present invention, the electronic device may further include a speaker module, and the first duct member may be disposed in parallel with the speaker module.

According to various embodiments of the present invention, the electronic device may further include an opening portion formed on the front surface of the housing, such that a sound generated from the speaker module may be output through the opening portion, and where a part of the opening portion may provide the first sound input hole.

According to various embodiments of the present invention, the second duct member may surround at least a part of the enclosure.

According to various embodiments of the present invention, the first and second transducers may have different widths and different heights.

According to various embodiments of the present invention, an acoustic input module may include a plurality of transducers mounted on one surface of a circuit board, a control module mounted on the circuit board for controlling the transducers, an enclosure for accommodating at least the transducers, a first through hole formed into the circuit board, and a second through hole formed into the enclosure. A first transducer among the plurality of the transducers receives a sound through the first through hole and converts the received sound into an electrical signal, and a second transducer among the plurality of the transducers receives a sound through the second through hole and converts the received sound into an electrical signal.

According to various embodiments of the present invention, the acoustic input module may further include a diaphragm inside the enclosure. The diaphragm may isolate a space that accommodates the first transducer from a space that accommodates the second transducer inside the enclosure.

According to various embodiments of the present invention, the acoustic input module may further include a stepped portion along the boundary between the space that accommodates the first transducer from the space that accommodates the second transducer inside the enclosure.

According to various embodiments of the present invention, the acoustic input module may further include a first duct member configured to provide an acoustic wave guide connected to the first through hole and a second duct member configured to provide an acoustic wave guide connected to the second through hole.

As is apparent from the foregoing description, the acoustic input module and the electronic device including the same can receive sounds along different paths and can be miniaturized readily by controlling a plurality of transducers with one control module. Accordingly, a mounting space required for installation can be minimized and the quality of an input sound can be improved. For example, since sounds are received through the plurality of transducers, the audio zoom function, the multi-channel recording function, and the ambient noise cancellation function can be easily realized while the increase of the mounting space is suppressed. Further, since the plurality of transducers are controlled with the single control module, the increase of the size of the acoustic input module can be minimized, and when the acoustic input module is mounted in an electronic device, interference with other circuit devices can be readily suppressed.

For example, while it has been described in the specific embodiments of the present invention that the acoustic input module is configured to receive sounds through the sound input holes formed respectively on the front and rear surfaces of the housing, by way of example, the present invention is not limited thereto. For example, a sound may be received through a sound input hole formed on a side surface of the housing by appropriately designing acoustic wave guides provided by the duct members.

While it has been described in the specific embodiments of the present invention that the acoustic input module is configured to include one control module and a pair of transducers, by way of example, the present invention is not limited thereto. For example, an electronic device according to various embodiments of the present invention may include an acoustic input module having one control module and three or more transducers. Thus, the number of transducers may be appropriately determined according to the specification of an acoustic input module required for the electronic device.

While the present invention has been shown and described with reference to various embodiments thereof, it will be understood by those skilled in the art that various changes in form and details may be made therein without departing from the scope of the present invention as defined by the appended claims.

## Claims

1. An electronic device, the electronic device comprising:
at least first and second transducers mounted on a circuit board;
a control module, configured to control the transducers; and
at least first and second sound input holes formed in a housing of the electronic device;
wherein the first transducer is configured to receive a sound through the first sound input hole and convert the received sound into an electrical signal; and
wherein the second transducer is configured to receive a sound through the second sound input hole and convert the received sound into an electrical signal.

2. The electronic device of claim 1, further comprising:
an enclosure configured to accommodate the first and second transducers;
a first through hole formed in the circuit board; and
a second through hole formed in the enclosure;
wherein the first transducer receives a sound through the first sound input hole and the first through hole; and
wherein the second transducer receives a sound through the second sound input hole and the second through hole.

3. The electronic device of claim 2, further comprising:
a diaphragm inside the enclosure;
wherein the diaphragm is configured to isolate an enclosure space accommodating the first transducer from an enclosure space accommodating the second transducer.

4. The electronic device of claim 3,wherein the enclosure comprises a stepped portion along the boundary between the enclosure space accommodating the first transducer and the enclosure space accommodating the second transducer.

5. The electronic device of any one of claims 2 to 4, further comprising:
a first duct member configured to provide an acoustic wave guide from the first sound input hole to the first through hole; and
a second duct member configured to provide an acoustic wave guide from the second sound input hole to the second through hole.

6. The electronic device of claim 5, further comprising a speaker module, wherein the first duct member is disposed in parallel with the speaker module.

7. The electronic device of claim 6, further comprising:
an opening portion formed on a front surface of the housing,
wherein a sound generated from the speaker module is output through the opening portion; and
wherein a part of the opening portion provides the first sound input hole.

8. The electronic device of any one of claims 5 to 7, wherein the second duct member surrounds at least a part of the enclosure.

9. The electronic device of any one of the preceding claims, wherein the first and second transducers have different widths and different heights.

10. An acoustic input module, the acoustic module comprising:
at least first and second transducers mounted on a circuit board;
a control module, configured to control the transducers;
an enclosure configured to accommodate the first and second transducers;
a first through hole formed in the circuit board; and
a second through hole formed in the enclosure;
wherein the first transducer is configured to receive a sound through the first through hole and convert the received sound into an electrical signal; and
wherein the second transducer receives a sound through the second through hole and convert the received sound into an electrical signal.

11. The acoustic input module of claim 10, further comprising a diaphragm inside the enclosure;
wherein the diaphragm is configured to isolate an enclosure space accommodating the first transducer from an enclosure space accommodating the second transducer.

12. The acoustic input module of claim 11, the enclosure further comprising a stepped portion along the boundary between the enclosure space accommodating the first transducer and the enclosure space accommodating the second transducer.

13. The acoustic input module of any one of claims 10 to 12, further comprising:
a first duct member configured to provide an acoustic wave guide connected to the first through hole; and
a second duct member configured to provide an acoustic wave guide connected to the second through hole.

14. The acoustic input module of claim 13, wherein the second duct member surrounds at least a part of the enclosure.

15. The acoustic input module of any one of claims 10 to 14, wherein the first and second transducers have different widths and different heights.
